# EUROPEAN PATENT APPLICATION

(11) **EP 4 603 525 A1**
(43) Date of publication of application: **20.08.2025**
(21) Application number: 23899775.3
(22) Date of filing: 22.11.2023
(51) Int. Cl.: C08G 18/64, B01D 69/02, B01D 69/12, B01D 67/00, C02F 1/44

(54) **ACID- AND ALKALI-RESISTANT COMPOSITE NANOFILTRATION MEMBRANE, AND PREPARATION METHOD THEREFOR AND USE THEREOF**

(30) Priority: 07.12.2022 CN 202211569289
(71) Applicant: China Petroleum & Chemical Corporation, Beijing 100728 (CN); Sinopec (Beijing) Research Institute of Chemical Industry Co., Ltd., Beijing 100013 (CN)
(72) Inventor: ZHAO, Guoke, Beijing 100013 (CN); WU, Changjiang, Beijing 100013 (CN); ZHANG, Yang, Beijing 100013 (CN); LIU, Yiqun, Beijing 100013 (CN); PAN, Guoyuan, Beijing 100013 (CN); TANG, Gongqing, Beijing 100013 (CN); YU, Hao, Beijing 100013 (CN); ZHAO, Muhua, Beijing 100013 (CN)
(74) Representative: Hoffmann Eitle
(86) International application number: PCT/CN2023/133243
(87) International publication number: WO 2024/120196

(57) **Abstract**

The present invention relates to the technical field of membrane separation, and specifically relates to an acid- and alkali-resistant composite nanofiltration membrane, and a preparation method therefor and the use thereof. The acid- and alkali-resistant composite nanofiltration membrane comprises a bottom layer, a porous middle layer and a poly(triazine amine-urea) separation layer in sequence. The poly(triazine amine-urea) separation layer comprises a structural unit I from a polyamine compound, a structural unit II from a triazine compound containing a C-Cl bond, and a structural unit III from a polyisocyanate compound, wherein the structural unit I and the structural unit II are connected via a structure of formula (I); the structural unit I and the structural unit III are connected via formula (II); and at least one compound of the polyamine compound, the triazine compound containing a C-Cl bond, and the polyisocyanate compound contains 3 or more reaction groups. The separation layer of the acid- and alkali-resistant composite nanofiltration membrane comprises a triazine ring, the structure of formula (III) and also the structure of formula (IV), so that the nanofiltration membrane comprising the poly(triazine amine-urea) separation layer has good acid- and alkali-resistance and also good desalination rate and water flux.

## Description

### CROSS-REFERENCE TO RELATED APPLICATIONS

The application claims the benefit of the Chinese patent application No. "202211569289.X", filed on December 7, 2022, the content of which is specifically and entirely incorporated herein by reference.

### TECHNICAL FIELD

The present invention relates to the technical field of membrane separation, in particular to an acid- and alkali-resistant composite nanofiltration membrane, a preparation method therefor and the use thereof.

### BACKGROUND ART

The production processes of the mining industry, electroplating industry, fermentation industry, papermaking, printing, and dyeing industries often generate a large amount of acidic wastewater containing inorganic acids (e.g., hydrochloric acid and sulfuric acid), and other valuable components, or harmful substances, which need to be recycled or treated separately. The recovery of precious metals from acidic wastewater may produce a favorable economic value, and the purified acid solutions can be reused as resources and avoid pollution to the environment. Currently, the treatment methods for acidic wastewater include a neutralization precipitation process, an electrolysis process, an ion exchange process, a membrane separation process, and the like, wherein the membrane separation process has advantages such as low cost, high efficiency, small floor area, and not causing secondary pollution, thus it has a wide application prospect in the field of the acidic wastewater treatment. The nanofiltration membrane can effectively intercept macromolecules and high-valence ions, and permeate monovalent ions, it has a promising application potential in acid recycling, precious metal enrichment, acidic wastewater treatment, and other aspects based on the performance characteristics of the nanofiltration membrane.

Currently, the commercialized nanofiltration membrane materials are mainly polyamides. However, C=O bonds are vulnerable to an attack from nucleophilic electrons of hydrogen cation H⁺ under an acidic condition, the amide bonds are hydrolyzed, destroying the membrane separation layer structure and decreased interception performance. The literature (M Liu, Z Chen, S Yu. Thin-membrane composite polyamide reverse osmosis membranes with improved acid stability and chlorine resistance by coating N-isopropylacrylamide-co-acrylamide copolymers. Desalination, 2011, 270: 248-257) has carried out an acid-resistance study of polyamide reverse osmosis membranes, after testing the polyamide reverse osmosis membranes continuously for 60 days in a mixed solution of hydrochloric acid and sodium chloride, the water flux of said membranes is greatly increased, and the desalination rate is significantly decreased. The nanofiltration membranes with polyamide as the separation layer material can be used in the pH range of 2-11, but the nanofiltration membranes cannot be used in a strong acidic environment, which greatly limits their use in the field of acidic wastewater treatment. As a result, the development of acid-resistant nanofiltration membranes with excellent comprehensive separation performance has significant academic and application values.

CN107930412A discloses a preparation method for acid-resistant poly(amide-triazine-amine) nanofiltration composite membrane. Cyanuric chloride and polyamine are used as raw materials, and a nucleophilic substitution reaction is carried out to prepare a poly(triazine) amine precursor which is used as an aqueous-phase reaction monomer; a poly(triazine) amine precursor aqueous-phase reaction solution and a polyacyl chloride oil-phase reaction solution are subjected to an interfacial polymerization reaction to prepare the acid-resistant poly(amide-triazine-amine) nanofiltration composite membrane on a porous substrate. The preparation method of nanofiltration composite membrane can avoid the defect that interfacial polymerization aqueous-phase monomer is limited to linear polynary active amines, but the preparation process of poly(triazine) amine precursor is complicated to use for the scaled-up operation.

CN107349804A discloses a preparation method for an acid-resistant nanofiltration membrane, the nanofiltration membrane is obtained by preparing a water-phase solution by adding polyethyleneimine, aminated grapheme, and an acid-binding agent into deionized water, using cyanuric chloride as an oil-phase monomer, and through an interfacial polymerization method. The addition of aminated graphene can increase the flux of the membrane to some extent, but the acid-resistant nanofiltration membrane is expensive and can hardly be put into industrial application.

Cyanuric chloride is a commonly used monomer for preparing a poly(triazine) amine composite membrane, its reactivity decreases as chlorine atoms are gradually substituted, thus the prepared poly(triazine) amine composite membrane has a low degree of crosslinking and a poor desalinization rate. As a result, it is urgent to develop an acid- and alkali-resistant composite nanofiltration membrane having a simple preparation process and excellent separation performance.

### SUMMARY OF THE INVENTION

The present invention aims to overcome the defects in the prior art that the low crosslinking degree of the separation layer of the acid- and alkali-resistant composite nanofiltration membrane causes poor desalination rate, and a large thickness of the separation layer results in low water flux, and discloses an acid- and alkali-resistant composite nanofiltration membrane, a preparation method therefor and the use thereof. The separation layer of the acid- and alkali-resistant composite nanofiltration membrane comprises a triazine ring, a structure represented by 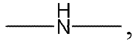 and a structure represented by 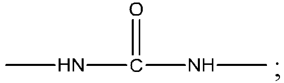 wherein the triazine ring has strong conjugation effect and good chemical inertness, the polyurea-like structure has high density of hydrogen bonds, such that the nanofiltration membrane comprising the poly(triazine amine-urea) separation layer has desirable acid- and alkali-resistance. Further, by adjusting the content of each structural unit, the acid-and alkali-resistant composite nanofiltration membrane having a thin and dense separation membrane can be prepared, and the acid- and alkali-resistant composite nanofiltration membrane has good desalination rate and water flux.

To achieve the above objects, the first aspect of the present invention discloses an acid- and alkali-resistant composite nanofiltration membrane comprises a bottom layer, a porous middle layer and a poly(triazine amine-urea) separation layer in sequence;
wherein the poly(triazine amine-urea) separation layer comprises a structural unit I from a polyamine compound, a structural unit II from a triazine compound containing a C-Cl bond, and a structural unit III from a polyisocyanate compound;
wherein the structural unit I and the structural unit II are connected via a structure represented by 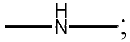
the structural unit I and the structural unit III are connected via a structure represented by 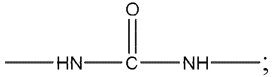
at least one compound of the polyamine compound, the triazine compound containing a C-Cl bond, and the polyisocyanate compound comprise 3 or more reaction groups.

The second aspect of the present invention discloses a method for preparing an acid- and alkali-resistant composite nanofiltration comprising:
(1) preparing a porous middle layer on a surface of the bottom layer;
(2) contacting a surface of the porous middle layer with an aqueous polyamine compound solution, then contacting with an organic solution comprising a triazine compound containing a C-Cl bond and a polyisocyanate compound, and performing an interfacial polymerization reaction to prepare the acid- and alkali-resistant composite nanofiltration membrane;
wherein at least one compound of the polyamine compound, the triazine compound containing a C-Cl bond, and the polyisocyanate compound comprise 3 or more reaction groups.

The third aspect of the present invention discloses an acid- and alkali-resistant composite nanofiltration membrane prepared by the aforementioned method.

The fourth aspect of the present invention discloses a method of using the aforementioned acid- and alkali-resistant composite nanofiltration membrane in the field of water treatment.

Due to the above technical solution, the acid- and alkali-resistant composite nanofiltration membrane and its preparation method and use provided by the present invention produce the following favorable effects:
the acid- and alkali-resistant composite nanofiltration membrane disclosed by the present invention comprises a poly(triazine amine-urea) separation layer comprising a triazine ring, a structure represented by 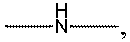 and a structure represented by 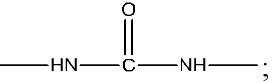 wherein the triazine ring has strong conjugation effect and good chemical inertness, the polyurea-like structure has high density of hydrogen bonds, such that the nanofiltration membrane comprising the poly(triazine amine-urea) separation layer has desirable acid-and alkali-resistance.

In addition, the composite nanofiltration membrane provided by the present invention has desirable acid- and alkali-resistance, excellent desalination rate, and water flux, the membrane can further recycle acid or alkali while performing the separation of acid or alkali with salt.

Furthermore, by adjusting the content of structural units in the poly(triazine-urea) separation layer so that the separation layer has a specific density, which has a synergistic effect with a specific thickness of the separation layer, the balance between the desalinization rate and the water flux is achieved, thus the prepared composite nanofiltration membrane has a high water flux while exhibiting an excellent acid- and alkali-resistance and desirable desalinization rate.

### BRIEF DESCRIPTION OF THE DRAWINGS

FIG. 1 illustrates the FTIR (Fourier Transform Infrared Spectroscopy) spectrogram of the nanofiltration membranes prepared in Example 1, Example 2, Example 3, Comparative Example 1, and Comparative Example 2;
FIG. 2 illustrates the surface XPS (X-ray Photoelectron Spectroscopy) spectrogram of nanofiltration membranes prepared in Example 1, Example 2, Example 3, Comparative Example 1, and Comparative Example 2;
FIG. 3 illustrates the cross-sectional SEM (Scanning Electron Microscopy) images of the separation layers in the nanofiltration membranes prepared in Example 1, Example 2, Example 3, Comparative Example 1, and Comparative Example 2;
FIG. 4 illustrates the molecular weight cut-off characterization curve of the nanofiltration membranes prepared in Example 1, Example 2, Example 3, Comparative Example 1, and Comparative Example 2;
FIG. 5 illustrates the surface SEM images of the nanofiltration membranes prepared in Example 1, Example 2, Example 3, Comparative Example 1, and Comparative Example 2;
FIG. 6 illustrates the surface SEM images of the nanofiltration membrane prepared in Example 1 after being soaked in 20wt% NaOH aqueous solution and 20wt% HCl aqueous solution for 150 days respectively;
FIG. 7 illustrates the FTIR spectrogram of the nanofiltration membrane prepared in Example 1 after being soaked in 20wt% NaOH aqueous solution and 20wt% HCl aqueous solution for 150 days respectively;
FIG. 8 illustrates the molecular weight cut-off characterization curve of the nanofiltration membrane prepared in Example 1 after being soaked in 20wt% NaOH aqueous solution and 20wt% HCl aqueous solution for 150 days respectively.

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention discloses an acid- and alkali-resistant composite nanofiltration membrane, the acid- and alkali-resistant composite nanofiltration membrane comprises a bottom layer, a porous middle layer, and a poly(triazine amine-urea) separation layer in sequence;
wherein the poly(triazine amine-urea) separation layer comprises a structural unit I from a polyamine compound, a structural unit II from a triazine compound containing a C-Cl bond, and a structural unit III from a polyisocyanate compound;
wherein the structural unit I and the structural unit II are connected via a structure represented by 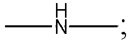
the structural unit I and the structural unit III are connected via a structure represented by 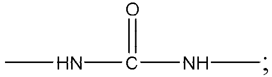
at least one compound of the polyamine compound, the triazine compound containing a C-Cl bond, and the polyisocyanate compound comprise 3 or more reaction groups.

In the present invention, the acid- and alkali-resistant composite nanofiltration membrane comprises a poly(triazine amine-urea) separation layer comprising a triazine ring structure, which is a nitrogen-containing heterocycle with a structure similar to that of a benzene ring, wherein the triazine ring has strong conjugation effect and good chemical inertness, and exhibits excellent acid- and alkali-resistance.

Further, the separation layer comprises a structure represented by 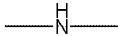 and a structure represented by 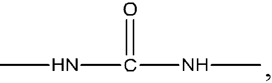 which are capable of significantly increasing the crosslinking density and the hydrogen bond density of the separation layer, so that the nanofiltration membrane has excellent chemical stability (in particular, excellent acid-and alkali-resistance) while having a high desalinization rate and water flux. In the present invention, the poly(triazine amine-urea) separation layer has the advantages of both polytriazine amine and polyurea.

At least one compound of the polyamine compound, the triazine compound containing a C-Cl bond, and the polyisocyanate compound contains 3 reaction groups, the arrangement can ensure that the polymerization reaction forms a cross-linked structure, and avoids the formation of a linear polymer, thereby ensuring a high desalination rate of the prepared composite nanofiltration membrane.

In the present invention, the reaction groups refer to the reactive groups in the polyamine compound, triazine compound, and polyisocyanate compound, specifically, for the polyamine compound, the reaction groups refer to amine groups (-NH₂) in the polyamine compound; for triazine compound, the reaction groups refer to C-Cl bonds in triazine compound; for polyisocyanate compound, the reaction groups refer to cyano groups (-NCO) in polyisocyanate compound.

According to a particularly preferred embodiment of the present invention, a content of the structural unit I is within the range of 40-60wt%, a content of the structural unit II is within the range of 10-20wt%, and a content of the structural unit III is within the range of 30-40wt%, based on a total weight of the poly(triazine amine-urea) separation layer.

In the present invention, adjustment of the density and thickness of the separation layer can be achieved by controlling the content of each structural unit of the separation layer; when the content of each structural unit falls into the above ranges, it is possible to ensure that the composite nanofiltration membrane has a specific density and a suitable thickness of the separation layer, both of which produce a synergistic effect so that the composite nanofiltration membrane has a specific water flux while having an excellent acid-resistance and a desirable desalinization rate.

In the present invention, based on the total weight of the poly(triazine amine-urea) separation layer, the content of the structural unit I is within the range of 40-60wt%, for example, the content may be 40wt%, 41wt%, 42wt%, 43wt%, 44wt%, 45wt%, 46wt%, 47wt%, 48wt%, 49wt%, 50wt%, 51wt%, 52wt%, 53wt%, 54wt%, 55wt%, 56wt%, 57wt%, 58wt%, 59wt%, 60wt%, and a random value within the range consisting of any two numerical values; the content of the structural unit II is within the range of 10-20wt%, for example, the content may be 10wt%, 11wt%, 12wt%, 13wt%, 14wt%, 15wt%, 16wt%, 17wt%, 18wt%, 19wt%, 20wt%, and a random value within the range consisting of any two numerical values; the content of the structural unit III is within the range of 30-40wt%, for example, the content may be 30wt%, 31wt%, 32wt%, 33wt%, 34wt%, 35wt%, 36wt%, 37wt%, 38wt%, 39wt%, 40wt%, and a random value within the range consisting of any two numerical values.

According to a particularly preferred embodiment of the present invention, the content of the structural unit I is within the range of 45-50wt%, the content of the structural unit II is within the range of 12-15wt%, and the content of the structural unit III is within the range of 30-35wt%, based on the total weight of the poly(triazine amine-urea) separation layer.

According to a particularly preferred embodiment of the present invention, the polyamine compound has a structure represented by at least one of the formulae (1) - (5); 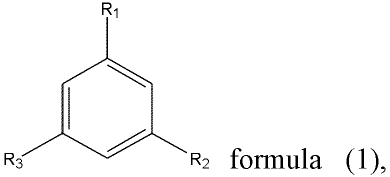 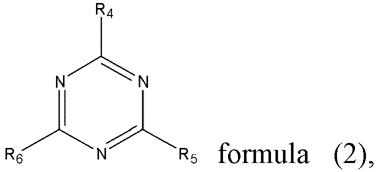 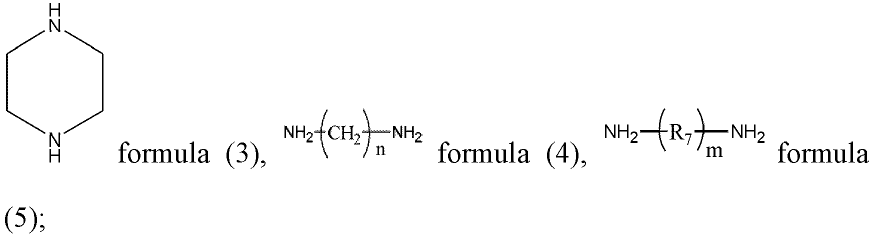
R₁, R₂, and R₃ are each independently (CH₂)ₓNH₂ or H, x is an integer from 0 to 5, and at least two of R₁, R₂, and R₃ are simultaneously NH₂ or (CH₂)ₓNH₂;
R₄, R₅, and R₆ are each independently (CH₂)_{y}NH₂ or H, y is an integer from 0 to 5, and at least two of R₄, R₅, and R₆ are simultaneously NH₂ or (CH₂)_{y}NH₂;
n is an integer from 2 to 8;
R₇ is 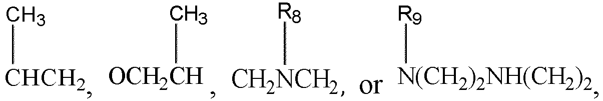 m is an integer from 30 to 100, R₈ and R₉ are each independently H, [(CH₂)₂NH(CH₂)₂]ₚNH₂, or (CH₂)_{q}NH₂, p is an integer from 2 to 10, and q is an integer from 2 to 10.

In the present invention, the polyamine compound represented by formula (1) includes, but is not limited to, m-phenylenediamine, p-phenylenediamine, o-phenylenediamine, 1,3, 5-triaminobenzene, etc.

In the present invention, the polyamine compound represented by formula (2) includes but is not limited to, melamine.

In the present invention, the polyamine compound represented by formula (3) includes but is not limited to, piperazine.

In the present invention, the polyamine compound represented by formula (4) includes, but is not limited to, ethylene diamine, 1,2-propylenediamine, 1,4-butanediamine, divinyl triamine, tetravinyl pentamine, etc.

In the present invention, the polyamine compound represented by formula (5) includes, but is not limited to, polyethylene polyamine, branched polyethylene imine, polyether amine, and the like, wherein m denotes the polymerization degree of the polyamine compound represented by formula (5) and reflects the weight average molecular weight of the polyamine compound represented by formula (5).

Specifically, when R₇ is 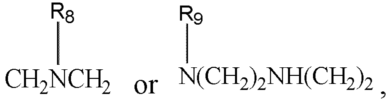 the polyamine compound represented by formula (5) is polyethylene polyamine and/or branched polyethylene imine, wherein p and q denote the branched chain with various chain lengths in the polyethylene polyamine or branched polyethylene imine.

According to a particularly preferred embodiment of the present invention, the polyamine compound is at least one selected from the group consisting of m-phenylenediamine, p-phenylenediamine, o-phenylenediamine, 1,3,5-triaminobenzene, melamine, piperazine, ethylene diamine, 1,2-propylenediamine, 1,4-butanediamine, divinyl triamine, tetravinyl pentamine, polyethylene polyamine, branched polyethylene imine, and polyetheramine; more preferably a branched polyethylene imine.

In a particularly preferred embodiment according to the present invention, the branched polyethylene imine has a weight average molecular weight within the range of 10,000-50,000 g/mol, more preferably within the range of 15,000-30,000 g/mol. For example, the branched polyethylene imine has a weight average molecular weight of 10,000 g/mol, 15,000 g/mol, 20,000 g/mol, 25,000 g/mol, 30,000 g/mol, 35,000 g/mol, 40,000 g/mol, 45,000 g/mol, 50,000 g/mol, and a random value within the range consisting of any two numerical values.

According to a particularly preferred embodiment of the present invention, the triazine compound is a triazine compound containing at least two C-Cl bonds.

According to a particularly preferred embodiment of the present invention, the triazine compound has a structure represented by formula (6); 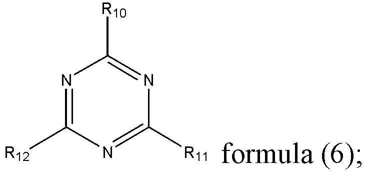 wherein R₁₀, R₁₁, and R₁₂ are each independently H, (CH₂)_{z}Cl, or phenyl, z is an integer from 0 to 4, at least two of R₁₀, R₁₁, and R₁₂ are simultaneously Cl or (CH₂)_{z}Cl.

According to a particularly preferred embodiment of the present invention, the triazine compound is at least one selected from the group consisting of cyanuric chloride (in formula (6), each of R₁₀, R₁₁, and R₁₂ is Cl), 2,4-dichloro-1,3,5-triazine (in formula (6), both R₁₀ and R₁₁ are Cl, and R₁₂ is H), and 2,4-dichloro-6-phenyl-1,3,5-triazine (in formula (6), both R₁₀ and R₁₁ are Cl, and R₁₂ is phenyl), more preferably cyanuric chloride.

According to a particularly preferred embodiment of the present invention, the polyisocyanate compound is at least one selected from the group consisting of meta-xylylene diisocyanate, isophorone diisocyanate, 1,6-hexamethylene diisocyanate, 2-methyl-m-phenylene diisocyanate, 1,4-benzene diisocyanate, toluene-2,4-diisocyanate, 4,4'-methylene-bis-(phenylisocyanate), 1,3-benzene diisocyanate, dicyclohexylmethane-4,4'-diisocyanate, trimethyl hexamethylene diisocyanate, and 1,4-cyclohexyl diisocyanate, more preferably 1,3-benzene diisocyanate.

According to a particularly preferred embodiment of the present invention, the polyamine compound comprises three or more reaction groups, the triazine compound containing a C-Cl bond is the triazine compound containing at least two C-Cl bonds; and the polyisocyanate compound comprises two or more reaction groups.

In a particularly preferred embodiment of the present invention, the bottom layer has a thickness within the range of 30-150µm, such as 30µm, 40µm, 50µm, 60µm, 70µm, 80µm, 90µm, 100µm, 110µm, 120µm, 130µm, 140µm, 150µm, and a random value within the range consisting of any two numerical values; the porous middle layer has a thickness within the range of 10-100µm, such as 10µm, 20µm, 30µm, 40µm, 50µm, 60µm, 70µm, 80µm, 90µm, 100µm, and a random value within the range consisting of any two numerical values; the poly(triazine amine-urea) separation layer has a thickness within the range of 10-500nm, such as 10nm, 20nm, 30nm, 40nm, 50nm, 60nm, 70nm, 80nm, 90nm, 100nm, 110nm, 120nm, 130nm, 140nm, 150nm, 160nm, 170nm, 180nm, 190nm, 200nm, 210nm, 220nm, 230nm, 240nm, 250nm, 260nm, 270nm, 280nm, 290nm, 300nm, 310nm, 320nm, 330nm, 340nm, 350nm, 360nm, 370nm, 380nm, 390nm, 400nm, 410nm, 420nm, 430nm, 440nm, 450nm, 460nm, 470nm, 480nm, 490nm, 500nm, and a random value within the range consisting of any two numerical values.

In the present invention, when the thickness of each layer in the acid- and alkali-resistant composite nanofiltration membrane, particularly the thickness of the poly(triazine amine-urea) separation layer, is controlled to fall into the above-mentioned ranges, it is possible to reduce the transmembrane resistance of water molecules while securing the mechanical strength of the nanofiltration membrane, so that the acid- and alkali-resistant composite nanofiltration membrane has a specific water flux.

In a particularly preferred embodiment of the present invention, the bottom layer has a thickness within the range of 50-125µm, the porous middle layer has a thickness within the range of 30-60µm, and the separation layer has a thickness within the range of 40-300nm.

According to the present invention, the acid- and alkali-resistant composite nanofiltration membrane has a molecular weight cut-off within the range of 100-300Da, for example, it may be 100Da, 110Da, 120Da, 130Da, 140Da, 150Da, 160Da, 170Da, 180Da, 190Da, 200Da, 210Da, 220Da, 230Da, 240Da, 250Da, 260Da, 270Da, 280Da, 290Da, 300Da, and a random value within the range consisting of any two numerical values.

In the present invention, the molecular weight cut-off is used to characterize the compactness of the separation layer of nanofiltration membranes. The small molecular weight cut-off of the separation layer indicates that its structure has high compactness, which is conducive to obtaining a better desalination rate, but is not beneficial to obtaining a high water flux, the desalination rate and the water flux are antagonistic to each other; however, the nanofiltration membranes prepared in the present invention achieve an equilibrium between the two indicators, the nanofiltration membranes has a high water flux while ensuring an excellent desalination rate.

According to a particularly preferred embodiment of the present invention the membrane has a molecular weight cut-off within the range of 110-260 Da.

In a preferred embodiment of the present invention, the acid- and alkali-resistant composite nanofiltration membrane has a separation layer thickness within the range of 40-50nm and a molecular weight cut-off of 120 Da or less.

According to a particularly preferred embodiment of the present invention, the porous middle layer is made of at least one polymer selected from the group consisting of polyethersulfone, polysulfone, polyaromatic ether, polybenzimidazole, polyether ketone, polyether ether ketone, polyacrylonitrile, polyvinylidene fluoride, and polyaryletherketone, more preferably polyethersulfone.

In the present invention, the porous middle layer has a porosity within the range of 65-75%, for example, the porosity may be 65%, 66%, 67%, 68%, 69%, 70%, 71%, 72%, 73%, 74%, 75%, and a random value within the range consisting of any two numerical values; the porous middle layer has a pore size within the range of 20-30nm, such as 20nm, 21nm, 22nm, 23nm, 24nm, 25nm, 26nm, 27nm, 28nm, 29nm, 30nm, and a random value within the range consisting of any two numerical values.

The kind of bottom layer is not particularly limited in the present invention, it may be a conventional bottom layer in the field that can be used as a bottom layer of the composite nanofiltration membrane, for example, the bottom layer may be made of a non-woven fabric, preferably, the non-woven fabric is polyethylene and/or polypropylene.

The second aspect of the present invention disclose a method for preparing an acid- and alkali-resistant composite nanofiltration membrane comprising:
(1) preparing a porous middle layer on a surface of the bottom layer;
(2) contacting a surface of the porous middle layer with an aqueous polyamine compound solution, then contacting with an organic solution comprising a triazine compound containing a C-Cl bond and a polyisocyanate compound, and performing an interfacial polymerization reaction to prepare the acid- and alkali-resistant composite nanofiltration membrane;
wherein at least one compound of the polyamine compound, the triazine compound containing a C-Cl bond, and the polyisocyanate compound comprise 3 or more reaction groups.

In the present invention, the surface of the porous middle layer contacts with an aqueous polyamine compound solution in advance, a portion of the aqueous polyamine compound solution is capable of penetrating the pores of the porous middle layer, and then contacting with an organic solution comprising a triazine compound containing a C-Cl bond and a polyisocyanate compound, so that the polyamine compound, the triazine compound, and the polyisocyanate compound can carry out the polymerization reaction at the surface and in the pores of the porous middle layer, thereby preparing a composite nanofiltration membrane having a poly(triazine-urea) as a separation layer, the porous middle layer and the separation layer in the composite nanofiltration membrane have excellent binding force therebetween and have excellent acid- and alkali-resistance, as well as desirable desalinization rate and water flux.

In the present invention, the surface of the porous middle layer in contact with the aqueous polyamine compound solution is a surface remote from the bottom layer.

In the method according to the second aspect of the present invention, the kinds of the polyamine compound, the triazine compound, and the polyisocyanate compound are the same as those in the first aspect of the present invention, the content will not be repeatedly described herein.

According to a particularly preferred embodiment of the present invention, a aqueous polyamine compound solution and a organic solution comprising the triazine compound containing a C-Cl bond and the polyisocyanate compound are used in amounts such that a mass ratio of the polyamine compound, triazine compound and polyisocyanate compound is (10-80): (1-8): 1, for example, the mass ratio may be 10:1:1, 10:2:1, 10:3:1, 10:4:1, 10:5:1, 10:6:1, 10:7:1, 10:8:1, 15:1:1, 15:2:1, 15:3:1, 15:4:1, 15:5:1, 15:6:1, 15:7:1, 15:8:1, 20:1:1, 20:2:1, 20:3:1, 20:4:1, 20:5:1, 20:6:1, 20:7:1, 20:8:1, 25:1:1, 25:2:1, 25:3:1, 25:4:1, 25:5:1, 25:6:1, 25:7:1, 25:8:1, 30:1:1, 35:2:1, 35:3:1, 35:4:1, 35:5:1, 35:6:1, 35:7:1, 35:8:1, 40:1:1, 40:2:1, 40:3:1, 40:4:1, 40:5:1, 40:6:1, 40:7:1, 40:8:1, 45:1:1, 45:2:1, 45:3:1, 45:4:1, 45:5:1, 45:6:1, 45:7:1, 45:8:1, 50:1:1, 50:2:1, 50:3:1, 50:4:1, 50:5:1, 50:6:1, 50:7:1, 50:8:1, 55:1:1, 55:2:1, 55:3:1, 55:4:1, 55:5:1, 55:6:1, 55:7:1, 55:8:1, 60:1:1, 60:2:1, 60:3:1, 60:4:1, 60:5:1, 60:6:1, 60:7:1, 60:8:1, 65:1:1, 65:2:1, 65:3:1, 65:4:1, 65:5:1, 65:6:1, 65:7:1, 65:8:1, 70:1:1, 70:2:1, 70:3:1, 70:4:1, 70:5:1, 70:6:1, 70:7:1, 70:8:1, 75:1:1, 75:2:1, 75:3:1, 75:4:1, 75:5:1, 75:6:1, 75:7:1, 75:8:1, 80:1:1, 80:2:1, 80:3:1, 80:4:1, 80:5:1, 80:6:1, 80:7:1, 10:8:1, and a random value within the range consisting of any two numerical values.

In the present invention, when the mass ratio of the polyamine compound, the triazine compound, and the polyisocyanate during the process of preparing the separation layer is controlled to fall into the above ranges, the separation layer may have a low thickness and a high compactness, such that the prepared acid- and alkali-resistant composite nanofiltration membrane balance a high water flux and a high desalinization rate within a certain range.

Further, the aqueous polyamine compound solution and the organic solution comprising the triazine compound containing a C-Cl bond and the polyisocyanate compound are used in amounts such that the mass ratio of the polyamine compound, triazine compound, and polyisocyanate compound is (20-40): (1-5): 1.

According to a particularly preferred embodiment of the present invention, the aqueous polyamine compound solution has a concentration within the range of 0.2wt%-10wt%, more preferably within the range of 0.5wt%-5wt%, for instance, the concentration may be 0.2wt%, 0.3wt%, 0.4wt%, 0.5wt%, 0.6wt%, 0.7wt%, 0.8wt%, 0.9wt%, 1wt%, 1.5wt%, 2wt%, 2.5wt%, 3wt%, 3.5wt%, 4wt%, 4.5wt%, 5wt%, and a random value within the range consisting of any two numerical values.

In the present invention, the aqueous polyamine compound solution is formulated by dissolving the polyamine compound in water.

According to a particularly preferred embodiment of the present invention, a concentration of the triazine compound containing a C-Cl bond in the organic solution is within the range of 0.05wt%-2wt%, more preferably within the range of 0.1wt%-1wt%, for example, the concentration may be 0.05wt%, 0.06wt%, 0.07wt%, 0.08wt%, 0.09wt%, 0.1wt%, 0.11wt%, 0.12wt%, 0.13wt%, 0.14wt%, 0.15wt%, 0.16wt%, 0.17wt%, 0.18wt%, 0.19wt%, 0.2wt%, 0.25wt%, 0.3wt%, 0.35wt%, 0.4wt%, 0.45wt%, 0.5wt%, 0.55wt%, 0.6wt%, 0.65wt%, 0.7wt%, 0.75wt%, 0.8wt%, 0.85wt%, 0.9wt%, 1wt%, 1.1wt%, 1.2wt%, 1.3wt%, 1.4wt%, 1.5wt%, 1.6wt%, 1.7wt%, 1.8wt%, 1.9wt%, 2wt%, and a random value within the range consisting of any two numerical values.

According to a particularly preferred embodiment of the present invention, a concentration of polyisocyanate compound in the organic solution is within the range of 0.001wt%-0.5wt%, more preferably within the range of 0.01wt%-0.2wt%, for example, the concentration may be 0.001wt%, 0.002wt%, 0.003wt%, 0.004wt%, 0.005wt%, 0.01wt%, 0.02wt%, 0.03wt%, 0.04wt%, 0.05wt%, 0.06wt%, 0.07wt%, 0.08wt%, 0.09wt%, 0.1wt%, 0.11wt%, 0.12wt%, 0.13wt%, 0.14wt%, 0.15wt%, 0.16wt%, 0.17wt%, 0.18wt%, 0.19wt%, 0.2wt%, and a random value within the range consisting of any two numerical values.

In the present invention, the organic solution is obtained by mixing a triazine compound and a polyisocyanate compound with an organic solvent, wherein the organic solvent is at least one selected from the group consisting of n-hexane, dodecane, n-heptane, alkane solvent oil (Isopar E, Isopar G, Isopar H, Isopar L, and Isopar M) and the like, preferably the alkane solvent oil Isopar E.

In a particularly preferred embodiment of the present invention, a contacting conditions comprise a contact time within the range of 5-100s, such as 5s, 10s, 15s, 20s, 25s, 30s, 35s, 40s, 45s, 50s, 55s, 60s, 65s, 70s, 75s, 80s, 85s, 90s, 95s, 100s, and a random value within the range consisting of any two numerical values, more preferably within the range of 10-60s, and a contact temperature within the range of 10-50°C, such as 10°C, 15°C, 20°C, 25°C, 30°C, 35°C, 40°C, 45°C, 50°C, and a random value within the range consisting of any two numerical values, more preferably within the range of 20-30°C.

According to a particularly preferred embodiment of the present invention, a interfacial polymerization reaction conditions comprise a reaction temperature within the range of 10-50°C, such as 10°C, 15°C, 20°C, 25°C, 30°C, 35°C, 40°C, 45°C, 50°C, and a random value within the range consisting of any two numerical values, and a reaction time within the range of 10-200s, for example, it may be 5s, 10s, 15s, 20s, 25s, 30s, 35s, 40s, 45s, 50s, 55s, 60s, 65s, 70s, 75s, 80s, 85s, 90s, 95s, 100s, 110s, 120s, 130s, 140s, 150s, 160s, 170s, 180 s, 190s, 200s, and a random value within the range consisting of any two numerical values; more preferably, the interfacial polymerization reaction conditions comprise the reaction temperature within the range of 20-30°C and the reaction time within the range of 20-120s.

In the present invention, a ratio of the volume of the aqueous polyamine compound solution to the contact area of the porous middle layer is within the range of 0.3-2 mL/cm², for example, the ratio may be 0.3 mL/cm², 0.4 mL/cm², 0.5 mL/cm², 1 mL/cm², 1.5 mL/cm², 2 mL/cm², and a random value within the range consisting of any two numerical values.

In the present invention, a ratio of the volume of the organic solution of the triazine compound containing a C-Cl bond and the polyisocyanate compound to the contact area of the porous middle layer is within the range of 0.1-0.8 mL/cm², for example, the ratio may be 0.1 mL/cm², 0.2 mL/cm², 0.3 mL/cm², 0.4 mL/cm², 0.5 mL/cm², 0.6 mL/cm², 0.7 mL/cm², 0.8 mL/cm², and a random value within the range consisting of any two numerical values.

In a particularly preferred embodiment of the present invention, the method further comprises a step of performing heat treatment on the product after the interfacial polymerization reaction; preferably, the heat treatment conditions comprise: a heat treatment temperature within the range of 40-150°C, such as 40°C, 50°C, 60°C, 70°C, 80°C, 90°C, 100°C, 110°C, 120°C, 130°C, 140°C, 150°C, and a random value within the range consisting of any two numerical values, more preferably within the range of 60-80°C; and a heat treatment time within the range of 0.5-20min, for example, the heat treatment time may be 0.5min, 1min, 2min, 3min, 4min, 5min, 6min, 7min, 8min, 9min, 10min, 12min, 14min, 16min, 18min, 20min, and a random value within the range consisting of any two numerical values, more preferably within the range of 5-10min.

The third aspect of the present invention discloses an acid- and alkali-resistant composite nanofiltration membrane produced with the aforementioned method.

The fourth aspect of the present invention discloses a method of using an acid- and alkali-resistant composite nanofiltration membrane in the field of water treatment.

According to a particularly preferred embodiment of the present invention, the use of an acid-and alkali-resistant composite nanofiltration membrane in the field of magnesium separation water treatment is particularly preferred.

According to a particularly preferred embodiment of the present invention, a non-woven fabric is selected as the bottom layer material, a porous middle layer of polyethersulfone is prepared on the bottom layer material, the porous middle layer has a porosity within the range of 65-75%, a pore size within the range of 20-30nm, the upper surface of the middle layer of polyethersulfone contacts with an aqueous solution of a branched polyethylene imine (with a concentration of 1-3wt%), the ratio of the volume of the aqueous solution of the branched polyethylene imine to the area of the middle layer of polyethersulfone is within the range of 0.4-0.6 mL/cm², the contact is performed at the temperature of 25-30°C for 60-70s, the solution is then discharged; the upper surface of the support layer subsequently contacts with an Isopar E solution containing cyanuric chloride and 1,3-benzene diisocyanate (wherein the cyanuric chloride concentration is within the range of 0.1-0.3wt% and the 1,3-benzene diisocyanate concentration is within the range of 0.025-0.1wt%), wherein the ratio of the volume of the Isopar E solution to the area of the middle layer of polyethersulfone is within the range of 0.3-0.5 mL/cm², the contact is performed at the temperature of 25-30°C for 60-70s, the solution is then discharged; the membrane is then placed in an oven and heat-treated at 70-80°C for 5-7min to obtain a composite nanofiltration membrane, wherein the aqueous solution of the branched polyethylene imine and the Isopar E solution containing cyanuric chloride and 1,3-benzene diisocyanate are used in amounts that the mass ratio of the branched polyethylene imine, cyanuric chloride to 1,3-benzene diisocyanate is (30-40): (3-4): 1.

The invention will be described in detail below with reference to examples.

If the specific conditions are not indicated in the following examples and comparative examples, the reactions are performed according to the conventional conditions or the conditions suggested by the manufacturers. If the manufacturers of the reagent or instrument are not specified, both the reagent and the instrument pertain to the commercially available conventional products.

The branched polyethylene imine (with a weight average molecular weight of 25,000 g/mol), m-phenylenediamine, cyanuric chloride, 2,4-dichloro-1,3,5-triazine, 1,3-benzene diisocyanate, 1,4-benzene diisocyanate, and 2-methyl-m-phenylene diisocyanate were all commercially available from J&K Scientific Ltd.

Other chemical reagents were purchased from the China National Pharmaceutical Group (Sinopharm) Chemical Reagent Co., Ltd.
(1) Test method of water flux of the composite nanofiltration membrane: the composite nanofiltration membrane was loaded in a membrane pool, pre-compressed under a pressure of 1.5 MPa for 1 hour, the water permeability of the composite nanofiltration membrane in a certain time was then measured under the conditions comprising a pressure of 2MPa and a temperature of 25°C, and the water flux was calculated based on the following formula: J=Q/(A×t), wherein J denoted the water flux, Q denoted the water permeability (L), A denoted the effective membrane area of the composite nanofiltation membrane (m²), and t denoted the time (h).
(2) Test method of desalinization rate of the composite nanofiltration membrane: the composite nanofiltration membrane was loaded in a membrane pool, pre-compressed under a pressure of 1.5 MPa for 1 hour, the concentration change of magnesium sulfate raw water solution with an initial concentration of 2,000 ppm and magnesium sulfate in permeation liquid within 1 hour was then tested under the conditions comprising a pressure of 2MPa and a temperature of 25°C, and desalinization rate was calculated according to the following formula: R=(Cf1-Cp1)/Cf1 100%, wherein R denoted the desalinization rate, Cp1 denoted the concentration of magnesium sulfate in permeation liquid, and Cf1 denoted the concentration of magnesium sulfate in magnesium sulfate raw water solution, all the parameters were measured by conductivity method.
(3) The test method of acid-resistance of the composite nanofiltration membrane: the composite nanofiltration membrane was soaked in an aqueous HCl solution having a concentration of 20wt% for 150 days, the membrane was washed with water, the desalinization rate of the acid-treated composite nanofiltration membrane against magnesium sulfate, and the water flux of the acid-treated composite nanofiltration membrane were tested according to the test methods in items (1) and (2), respectively.
(4) The test method of alkali-resistance of the composite nanofiltration membrane: the composite nanofiltration membrane was soaked in an aqueous NaOH solution having a concentration of 20wt% for 150 days, the membrane was washed with water, the desalinization rate of the alkali-treated composite nanofiltration membrane against magnesium sulfate, and the water flux of the alkali-treated composite nanofiltration membrane were tested according to the test methods in items (1) and (2), respectively.
(5) The test method of acid/alkali permeability of the composite nanofiltration membrane: the composite nanofiltration membrane was loaded in a membrane pool, pre-compressed under a pressure of 1.5 MPa for 1 hour, the acid/alkali permeability of the membrane was then measured under the conditions comprising a pressure of 2MPa and a temperature of 25°C. When the acid-permeability was tested, the raw water solution was the aqueous HCl solution having a concentration of 5wt%; when the alkali-permeability was tested, the raw water solution was the aqueous NaOH solution having a concentration of 5wt%. The acid/alkali permeability was calculated according to the following formula: T=Cp2/Cf2×100%, where Cp2 denoted the H⁺/OH⁻concentration in the permeation liquid, Cf2 denoted the H⁺/OH⁻concentration in the raw water solution, both were measured through the acid-base titration method.
(6) The thickness of the composite nanofiltration membrane was measured by using an SEM (Scanning Electron Microscope), and the specific test method was as follows: a brittle fracture was carried out on the composite nanofiltration membrane in liquid nitrogen, the cross-section was perpendicular to the observation visual angle, the composite nanofiltration membrane was fixed on a copper sample table by using a conductive adhesive, the platinum spraying treatment was performed to improve conductivity of the sample, and the cross-section morphology was observed by using the SEM. The obtained SEM pictures were analyzed with Image J software, and the separation layer thickness of the composite nanofiltration membrane was measured.
(7) The compactness of the separation layer in the composite nanofiltration membrane was expressed by the molecular weight cut-off, the test method of the molecular weight cut-off was as follows: the retention rates of the nanofiltration membrane on PEG with the molecular weights of 67 Da, 200 Da, 400 Da, 600 Da, and 800 Da were respectively tested, the coordinate diagram was drawn by using the molecular weight of PEG as the horizontal ordinate, and the corresponding retention rate as the longitudinal coordinate, the molecular weight cut-off of the nanofiltration membrane was defined as the corresponding molecular weight when the retention rate was 90%, in order to reflect the compactness of the separation layer of the nanofiltration membrane.
(8) The separation layer structure of the composite nanofiltration membrane was tested by adopting an infrared spectrogram, the specific test method included the following steps: after the composite nanofiltration membrane samples were prepared, the absorbance of the membrane samples was tested within the wave number range of 400-4,000cm⁻¹, and the data was drawn on an infrared characterization spectrum. The information of chemical bonding in the membrane separation layer was obtained by utilizing the characteristic that different chemical bonds or functional groups had various absorption frequencies and were positioned at different positions on the infrared spectrogram.
(9) The content of each structural unit in the separation layer of the composite nanofiltration membrane was measured by X-ray photoelectron spectroscopy of the membrane samples, the specific test method included the following steps: after the composite nanofiltration membrane samples were prepared, the full spectrum of an X-ray photoelectron spectroscopy and the fine spectrum of a nitrogen element of the sample were tested respectively, the fine spectrum of the nitrogen element was subjected to a peak splitting, different chemical states of the nitrogen element in a membrane structure and the proportion of the nitrogen element in the structure were obtained, the content of each structural unit of the membrane can be obtained through the corresponding conversion.

### Example 1

The PE non-woven fabric was selected as a bottom layer material, a polyether sulfone porous middle layer was prepared on the bottom layer material, wherein the porous middle layer had a pore diameter of 25nm and a porosity of 70%, an upper surface of the 100cm² polyether sulfone middle layer was contacted with 50mL of an aqueous branched polyethylene imine solution having a concentration of 2wt%, the liquid was discharged after the contact was performed at 25°C for 60s, the residual water phase on the surface layer was subsequently removed by using a rubber roller; the upper surface of the supporting layer was further contacted with Isopar E solution, 50mL of Isopar E solution contained 0.15wt% of cyanuric chloride and 0.05wt% of 1,3-benzene diisocyanate, the liquid was discharged after the contact was performed at 25°C for 60s; the membrane was then put into an oven and heat-treated at 70°C for 5min, a composite nanofiltration membrane N1 was prepared.

The mass ratio of the branched polyethylene imine and the cyanuric chloride to the 1,3-benzene diisocyanate was 40: 3: 1.

The content of each structural unit in the separation layer of the composite nanofiltration membrane was shown in Table 1. The thickness and molecular weight cut-off of the composite nanofiltration membrane were shown in Table 2.

### Example 2

The composite nanofiltration membrane was prepared according to the method in Example 1, except that the solutes of 50mL of Isopar E solution contained 0.1wt% of cyanuric chloride and 0.1wt% of 1,3-benzene diisocyanate, a composite nanofiltration membrane N2 was prepared.

The mass ratio of the branched polyethylene imine and the cyanuric chloride to the 1,3-benzene diisocyanate was 20: 1: 1.

The content of each structural unit in the separation layer of the composite nanofiltration membrane was shown in Table 1. The thickness and molecular weight cut-off of the composite nanofiltration membrane were shown in Table 2.

### Example 3

The composite nanofiltration membrane was prepared according to the method in Example 1, except that the solutes of 50mL of Isopar E solution contained 0.175wt% of cyanuric chloride and 0.025wt% of 1,3-benzene diisocyanate, a composite nanofiltration membrane N3 was prepared.

The mass ratio of the branched polyethylene imine and the cyanuric chloride to the 1,3-benzene diisocyanate was 80: 7: 1.

The content of each structural unit in the separation layer of the composite nanofiltration membrane was shown in Table 1. The thickness and molecular weight cut-off of the composite nanofiltration membrane were shown in Table 2.

### Example 4

The composite nanofiltration membrane was prepared according to the method in Example 1, except that the solutes of 50mL of Isopar E solution contained 0.15wt% of 2,4-dichloro-1,3,5-triazine and 0.05wt% of 1,3-benzene diisocyanate, a composite nanofiltration membrane N4 was prepared.

The mass ratio of the branched polyethylene imine and the 2,4-dichloro-1,3,5-triazine to the 1,3-benzene diisocyanate was 40: 3: 1.

The content of each structural unit in the separation layer of the composite nanofiltration membrane was shown in Table 1. The thickness and molecular weight cut-off of the composite nanofiltration membrane were shown in Table 2.

### Example 5

The composite nanofiltration membrane was prepared according to the method in Example 1, except that the solutes of 50mL of Isopar E solution contained 0.15wt% of cyanuric chloride and 0.05wt% of 1,4-benzene diisocyanate, a composite nanofiltration membrane N5 was prepared.

The mass ratio of the branched polyethylene imine and the cyanuric chloride to the 1,4-benzene diisocyanate was 40: 3: 1.

The content of each structural unit in the separation layer of the composite nanofiltration membrane was shown in Table 1. The thickness and molecular weight cut-off of the composite nanofiltration membrane were shown in Table 2.

### Example 6

The composite nanofiltration membrane was prepared according to the method in Example 1, except that the solutes of 50mL of Isopar E solution contained 0.15wt% of cyanuric chloride and 0.05wt% of 2-methyl-m-phenylene diisocyanate, a composite nanofiltration membrane N6 was prepared.

The mass ratio of the branched polyethylene imine and the cyanuric chloride to the 2-methyl-m-phenylene diisocyanate was 40: 3: 1.

The content of each structural unit in the separation layer of the composite nanofiltration membrane was shown in Table 1. The thickness and molecular weight cut-off of the composite nanofiltration membrane were shown in Table 2.

### Example 7

The composite nanofiltration membrane was prepared according to the method in Example 1, except that the solutes of 50mL of Isopar E solution contained 0.05wt% of cyanuric chloride and 0.05wt% of 1,3-benzene diisocyanate, a composite nanofiltration membrane N7 was prepared.

The mass ratio of the branched polyethylene imine and the cyanuric chloride to the 1,3-benzene diisocyanate was 40: 1: 1.

The content of each structural unit in the separation layer of the composite nanofiltration membrane was shown in Table 1. The thickness and molecular weight cut-off of the composite nanofiltration membrane were shown in Table 2.

### Example 8

The composite nanofiltration membrane was prepared according to the method in Example 1, except that the solutes of 50mL of Isopar E solution contained 0.01wt% of cyanuric chloride and 0.05wt% of 1,3-benzene diisocyanate, a composite nanofiltration membrane N8 was prepared.

The mass ratio of the branched polyethylene imine and the cyanuric chloride to the 1,3-benzene diisocyanate was 40: 0.2: 1.

The content of each structural unit in the separation layer of the composite nanofiltration membrane was shown in Table 1. The thickness and molecular weight cut-off of the composite nanofiltration membrane were shown in Table 2.

### Example 9

The composite nanofiltration membrane was prepared according to the method in Example 1, except that the solutes of 50mL of Isopar E solution contained 0.15wt% of cyanuric chloride and 0.001wt% of 1,3-benzene diisocyanate, a composite nanofiltration membrane N9 was prepared.

The mass ratio of the branched polyethylene imine and the cyanuric chloride to the 1,3-benzene diisocyanate was 2,000: 150: 1.

The content of each structural unit in the separation layer of the composite nanofiltration membrane was shown in Table 1. The thickness and molecular weight cut-off of the composite nanofiltration membrane were shown in Table 2.

### Example 10

The composite nanofiltration membrane was prepared according to the method in Example 1, except that the solutes of 50mL of Isopar E solution contained 0.15wt% of cyanuric chloride and 0.0005wt% of 1,3-benzene diisocyanate, a composite nanofiltration membrane N10 was prepared.

The mass ratio of the branched polyethylene imine and the cyanuric chloride to the 1,3-benzene diisocyanate was 4,000: 300: 1.

The content of each structural unit in the separation layer of the composite nanofiltration membrane was shown in Table 1. The thickness and molecular weight cut-off of the composite nanofiltration membrane were shown in Table 2.

### Example 11

The composite nanofiltration membrane was prepared according to the method in Example 1, except that the solutes of 50mL of Isopar E solution contained 0.075wt% of cyanuric chloride, 0.075wt% of 2,4-dichloro-1,3,5-triazine, and 0.05wt% of 1,3-benzene diisocyanate, a composite nanofiltration membrane N11 was prepared.

The mass ratio of the branched polyethylene imine, the cyanuric chloride, the 2,4-dichloro-1,3,5-triazine to the 1,3-benzene diisocyanate was 40: 1.5: 1.5: 1.

The content of each structural unit in the separation layer of the composite nanofiltration membrane was shown in Table 1. The thickness and molecular weight cut-off of the composite nanofiltration membrane were shown in Table 2.

### Example 12

The composite nanofiltration membrane was prepared according to the method in Example 1, except that 50mL of an aqueous solution containing 2wt% of the branched polyethylene imine was replaced with 50mL of the aqueous solution containing 2wt% of m-phenylenediamine, a composite nanofiltration membrane N12 was prepared.

The mass ratio of the m-phenylenediamine and the cyanuric chloride to the 1,3-benzene diisocyanate was 40: 3: 1

The content of each structural unit in the separation layer of the composite nanofiltration membrane was shown in Table 1. The thickness and molecular weight cut-off of the composite nanofiltration membrane were shown in Table 2.

### Comparative Example 1

The composite nanofiltration membrane was prepared according to the method in Example 1, except that 50mL of Isopar E solution only contained 0.2wt% of cyanuric chloride, the liquid was discharged after the contact was performed at 25°C for 60s; the membrane was then put into an oven and heat-treated at 70°C for 5min, a composite nanofiltration membrane D1 was prepared.

The mass ratio of the branched polyethylene imine to the cyanuric chloride was 10: 1.

The content of each structural unit in the separation layer of the composite nanofiltration membrane was shown in Table 1. The thickness and molecular weight cut-off of the composite nanofiltration membrane were shown in Table 2.

### Comparative Example 2

The composite nanofiltration membrane was prepared according to the method in Example 1, except that 50mL of Isopar E solution only contained 0.2wt% of 1,3-benzene diisocyanate, a composite nanofiltration membrane D2 was prepared.

The mass ratio of the branched polyethylene imine to the 1,3-benzene diisocyanate was 10: 1.

The content of each structural unit in the separation layer of the composite nanofiltration membrane was shown in Table 1. The thickness and molecular weight cut-off of the composite nanofiltration membrane were shown in Table 2.

### Comparative Example 3

The composite nanofiltration membrane was prepared according to the method in Example 1, except that 50mL of the aqueous solution containing 2wt% of the branched polyethylene imine was replaced with 50mL of the aqueous solution containing 2wt% of m-phenylenediamine, and the solutes in 50mL of the Isopar E solution contained 0.15wt% of 2,4-dichloro-1,3,5-triazine and 0.05wt% of 1,3-benzene diisocyanate, a composite nanofiltration membrane D3 was prepared.

The mass ratio of m-phenylenediamine and the triazine compound to the polyisocyanate compound was 40: 3: 1.

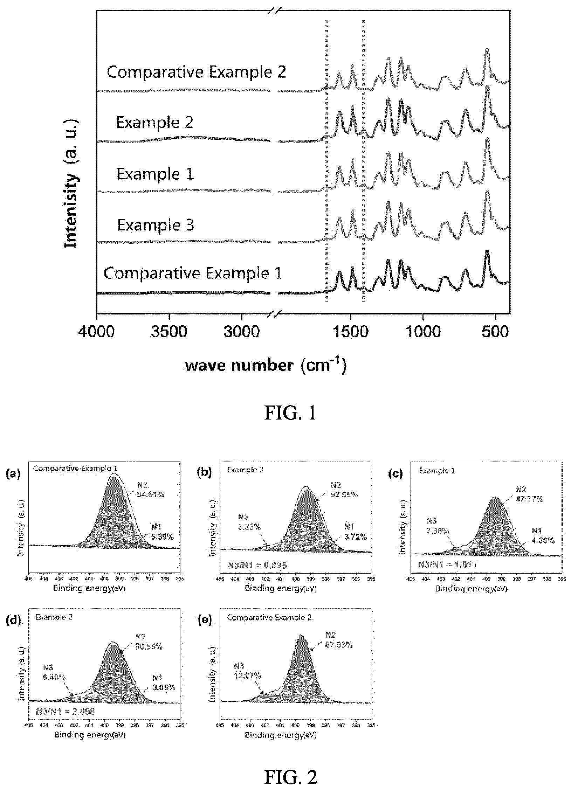

FIG. 1 illustrated an infrared (IR) spectrogram of the composite nanofiltration membranes prepared in Example 1, Example 2, Example 3, Comparative Example 1, and Comparative Example 2, as can be seen from FIG. 1, the composite nanofiltration membrane prepared in Comparative Example 2 shows a characteristic peak at the wave number 1,658 cm⁻¹, which corresponds to a characteristic peak of a carbonyl group in the urea group. The composite nanofiltration membrane prepared in Comparative Example 1 exhibits a characteristic peak at 1,413 cm⁻¹, which corresponds to a triazine ring in the structure of the triazine compound. It indicates that in Comparative Examples 1 and 2, the polyamine was subjected to an interfacial polymerization reaction with cyanuric chloride and 1,3-benzene diisocyanate to form the polytriazine amine separation layer and the polyurea separation layer respectively.

The infrared spectra of the composite nanofiltration membranes of Examples 1-3 each show the characteristic peaks at 1,658 cm⁻¹ and 1,413 cm⁻¹, indicating that a poly(triazine amine-urea) separation layer has been successfully formed.

FIG. 2 illustrated an XPS spectrogram of the composite nanofiltration membranes prepared in Example 1, Example 2, Example 3, Comparative Example 1, and Comparative Example 2. As can be seen from FIG. 2, it is indicated by the N1s fine spectrogram of the composite nanofiltration membrane that the nitrogen element in the composite nanofiltration membrane structure has different chemical states, wherein the binding energies of N1 (C-N=C), N2 (C-N-H) and N3 (N-C=O) are 398.3 eV, 399.6 eV, and 401.7 eV, respectively. Wherein the characteristic peak at N1 corresponds to a triazine ring in the triazine compound structure, and the characteristic peak at N3 corresponds to the carbonyl in the ureido group. The N3/N1 ratios of the composite nanofiltration membranes of Example 3, Example 1, and Example 2 are 0.895, 1.811, and 2.098 respectively. It indicates that when the content of 1,3-benzene diisocyanate increases, the amount of structural unit III in the separation layer of the composite nanofiltration membrane increases accordingly. The membrane prepared in Comparative Example 1 has no characteristic peak at the site N3, it demonstrates that the membrane has a polytriazine amine structure; the membrane prepared in Comparative Example 2 has no characteristic peak at the site N1, which demonstrates that the membrane has a polyurea structure.

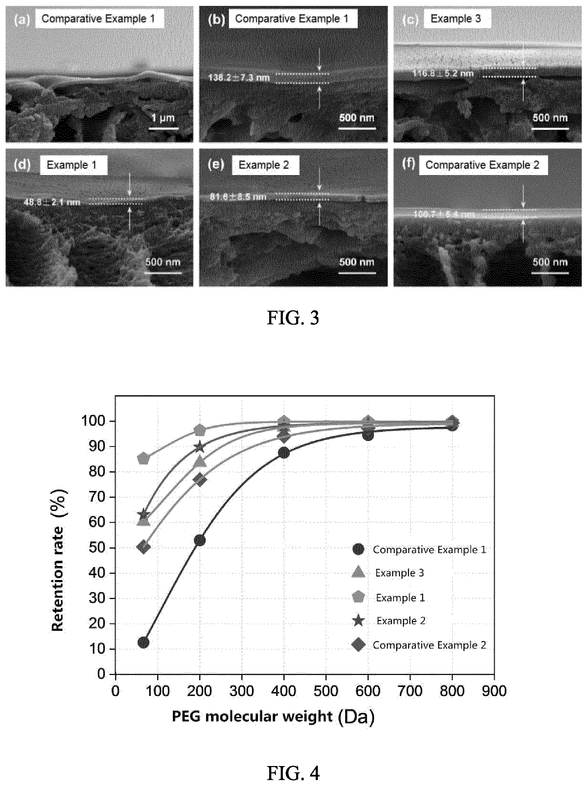

FIG. 3 illustrated the cross-sectional SEM images of the composite nanofiltration membranes prepared in Example 1, Example 2, Example 3, Comparative Example 1, and Comparative Example 2; as can be seen from FIG. 3, the thickness of the composite nanofiltration membrane prepared in Comparative Example 1 is 139nm, which is the maximum among all samples; in addition, the thickness of the poly(triazine amine-urea) separation layer is gradually reduced along with an increase of the proportion of 1,3-benzene diisocyanate in the organic phase, the thickness of the composite nanofiltration membrane of Example 3 is reduced to 116nm, and the thickness of the composite nanofiltration membrane of Example 1 is reduced to 48nm. When the proportion of cyanuric chloride to 1,3-benzene diisocyanate is appropriate (as shown in Example 1), the two compounds exert the optimum synergistic effect, the produced separation layer has the smallest thickness. When the proportion of 1,3-benzene diisocyanate is further increased, the thickness of the separation layer tends to increase, wherein the thickness of the composite nanofiltration membrane of Example 2 is 81nm, and the thickness of the composite nanofiltration membrane of Comparative Example 2 is 101nm.

FIG. 4 illustrated the molecular weight cut-off characterization curve of the nanofiltration membranes prepared in Example 1, Example 2, Example 3, Comparative Example 1, and Comparative Example 2. As can be seen from FIG. 4, the separation layer structure of the composite nanofiltration membrane of Comparative Example 1 is the loosest, the molecular weight cut-off (MWCO) value is 437 Da. When the proportion of 1,3-benzene diisocyanate in the organic phase increases, the molecular weight cut-off of the prepared composite nanofiltration membranes tends to decrease, wherein the molecular weight cut-off of the composite nanofiltration membrane of Example 1 is 118 Da, which is the smallest MWCO. When the 1,3-benzene diisocyanate content is further increased, the molecular weight cut-off increases, the molecular weight cut-off in Example 2 and Comparative Example 2 is 200 Da and 326 Da, respectively. When the ratio of cyanuric chloride to 1,3-benzene diisocyanate is appropriate (as shown in Example 1), the synergistic effect of the cyanuric chloride and the 1,3-benzene diisocyanate is most remarkable, and the obtained membrane has the most compact structure and the minimum molecular weight cut-off.

According to the present invention, the ratio of cyanuric chloride to 1,3-benzene diisocyanate is regulated and controlled, so that the separation membrane has a low molecular weight cut-off and small thickness, thus the composite nanofiltration membrane has excellent desalinization rate and water flux.

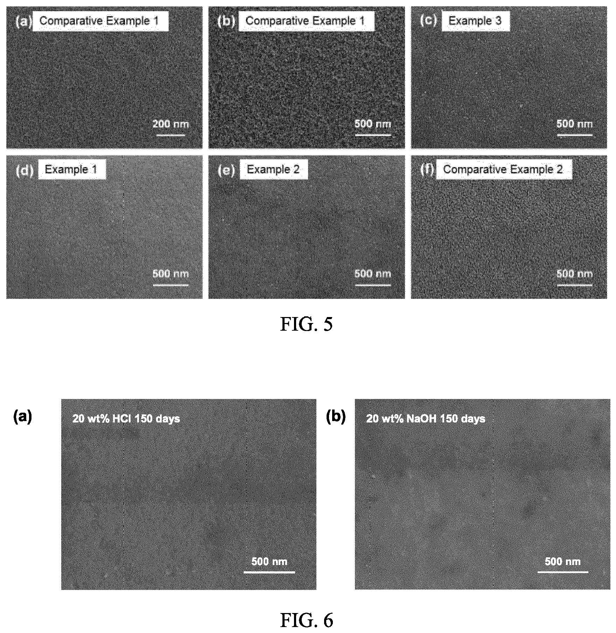

FIG. 5 illustrated the surface SEM images of the composite nanofiltration membranes prepared in Example 1, Example 2, Example 3, Comparative Example 1, and Comparative Example 2. As can be seen from FIG. 5, the surface morphology of the composite nanofiltration membrane of Comparative Example 1 is uniform and flat, but a large number of minute nodules having a uniform size can be observed. The surface morphology of the membrane is determined by the thermodynamics during the interfacial polymerization reaction process, the reaction activity of cyanuric chloride is low, the primary membrane layer formed in the interfacial polymerization reaction is relatively loose, the branched polyethylene imine permeates toward the organic phase reaction side, and further participates in the interfacial polymerization reaction, and the nodules are formed on the membrane surface. When the content of 1,3-benzene diisocyanate in the organic phase increases, the number of observable nodules on the membrane surface decreases.

The content of each structural unit in the separation layer of the composite nanofiltration membranes is shown in Table 1. The thickness and molecular weight cut-off of the composite nanofiltration membranes are shown in Table 2.

**Table 1**

| No. | Structural unit I (wt%) | Structural unit II (wt%) | Structural unit III (wt%) |
|---|---|---|---|
| N1 | 55.3 | 13.4 | 31.3 |
| N2 | 54.3 | 12.3 | 33.4 |
| N3 | 55.2 | 14.7 | 30.1 |
| N4 | 55.7 | 12.9 | 31.4 |
| N5 | 53.5 | 12.2 | 34.3 |
| N6 | 52.7 | 13.4 | 33.9 |
| N7 | 56.5 | 12.1 | 31.4 |
| N8 | 61.3 | 6.3 | 32.4 |
| N9 | 50.7 | 41.8 | 7.5 |
| N10 | 52.1 | 42.3 | 5.6 |
| N11 | 54.9 | 14.6 | 30.5 |
| N12 | 47.4 | 10.3 | 42.3 |
| D1 | 55.6 | 44.4 | / |
| D2 | 58.3 | / | 41.7 |
| D3 | 41.3 | 28.4 | 30.3 |

**Table 2**

| No. | Thickness of bottom layer (µm) | Thickness of the middle layer (µm) | Thickness of separation layer (nm) | Molecular Weight Cut-Off (Da) |
|---|---|---|---|---|
| N1 | 120 | 45 | 48 | 118 |
| N2 | 120 | 45 | 81 | 200 |
| N3 | 120 | 45 | 116 | 251 |
| N4 | 120 | 45 | 60 | 154 |
| N5 | 120 | 45 | 52 | 121 |
| N6 | 120 | 45 | 52 | 156 |
| N7 | 120 | 45 | 46 | 142 |
| N8 | 120 | 45 | 44 | 235 |
| N9 | 120 | 45 | 132 | 249 |
| N10 | 120 | 45 | 130 | 257 |
| N11 | 120 | 45 | 49 | 119 |
| N12 | 120 | 45 | 227 | 255 |
| D1 | 120 | 45 | 139 | 437 |
| D2 | 120 | 45 | 101 | 326 |
| D3 | 120 | 45 | 252 | 654 |

### Test Example 1

The water flux, the desalination rate against MgSO₄, the acid-resistance, and the alkali-resistance of the composite nanofiltration membranes prepared in Examples and Comparative Examples were tested, and the results were shown in Table 3.

**Table 3**

| No. | Desalinat ion rate (%) | Water flux (LMH) | After being treated with 20wt% of HCl for 150 days | | After being treated with 20wt% of NaOH for 150 days | |
|---|---|---|---|---|---|---|
| | | | Desalinatio n ion rate (%) | Water flux (LMH) | Desalinatio n ion rate (%) | Water flux (LMH) |
| N1 | 99.2 | 24.3 | 99.2 | 24.5 | 99.2 | 24.4 |
| N2 | 97.5 | 16.6 | 97.4 | 16.7 | 97.5 | 16.8 |
| N3 | 96.8 | 15.3 | 96.5 | 15.6 | 96.3 | 15.1 |
| N4 | 92.3 | 20.3 | 91.9 | 21.2 | 91.7 | 20.9 |
| N5 | 99.1 | 23.1 | 98.9 | 23.5 | 99.1 | 23.3 |
| N6 | 98.9 | 25.8 | 98.7 | 26.1 | 98.5 | 26.4 |
| N7 | 96.4 | 26.4 | 96.3 | 26.4 | 96.2 | 25.9 |
| N8 | 83.6 | 29.6 | 83.2 | 30.2 | 83.1 | 29.8 |
| N9 | 67.6 | 10.3 | 67.6 | 11.3 | 66.9 | 10.9 |
| N10 | 60.7 | 12.4 | 59.4 | 12.6 | 60.4 | 12.5 |
| N11 | 99.3 | 23.5 | 99.2 | 23.8 | 99.2 | 23.7 |
| N12 | 22.4 | 23.5 | 22.3 | 23.9 | 21.5 | 23.8 |
| D1 | 50.6 | 9.1 | 50.3 | 10.5 | 49.7 | 10.2 |
| D2 | 91.6 | 11.4 | 90.8 | 12.3 | 90.9 | 11.9 |
| D3 | 6.7 | 835 | 6.5 | 869 | 6.3 | 863 |

Referring to Table 1, Table 2, and Table 3, the separation layer in the composite nanofiltration membranes prepared in Examples of the present invention comprises a triazine ring, a structure represented by 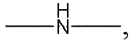 and a structure represented by 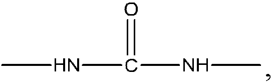 wherein the triazine ring has strong conjugation effect and good chemical inertness, the polyurea-like structure has a high density of hydrogen bonds, such that the nanofiltration membrane comprising the poly(triazine amine-urea) separation layer has desirable acid- and alkali-resistance, as well as excellent desalinization rate and water flux.

Furthermore, the isocyanate and the cyanuric chloride in the organic phase have desirable synergistic effects, and the nascent polyurea-layer structure has a dense structure at the early stage of the interfacial polymerization reaction, the dense structure effectively prevents the diffusion of the water-phase branched polyethylene imine into the organic phase, thereby forming a thin separation layer to ensure that the membrane has a specific water flux, and the micro-molecular cyanuric chloride further increases the cross-linking density of the separation layer as a whole, thereby ensuring an excellent desalinization rate.

Specifically, the composite nanofiltration membranes provided by Examples of the present invention have a relatively high desalinization rate and water flux, in particular, the desalinization rate and water flux of the composite nanofiltration membranes after treatment with 20wt% HCl for 150 days or treatment with 20wt% NaOH for 150 days are substantially unchanged, indicating that the nanofiltration membranes have desirable acid- and alkali-resistance.

Further, in Example 1 of the present invention, by selecting the appropriate triazine compound and polyisocyanate compound, and controlling the dosage ratio of the polyamine and the triazine compound to the polyisocyanate compound, the prepared composite nanofiltration membrane achieves the balance between the desalination rate and water flux, the composite nanofiltration membrane has both a high desalination rate and a high water flux is obtained.

In contrast to Example 1, Example 4 replaces the triazine compound containing three C-Cl bonds with the triazine compound containing two C-Cl bonds, the obtained separation layer has a reduced density, eventually resulting in a decreased desalination rate of the nanofiltration membrane.

### Test Example 2

The composite nanofiltration membrane N1 prepared in Example 1 was soaked in 20wt% of the HCl aqueous solution for 150 days and then rinsed with water, the surface morphology, surface structure, and molecular weight cut-off of the separation layer of the composite nanofiltration membrane were tested.

### Test Example 3

The composite nanofiltration membrane N1 prepared in Example 1 was soaked in 20wt% of the NaOH aqueous solution for 150 days and then rinsed with water, the surface morphology, surface structure, and molecular weight cut-off of the separation layer of the composite nanofiltration membrane were tested.

The composite nanofiltration membrane N1 was soaked in 20wt% HCl aqueous solution and 20wt% NaOH aqueous solution for 150 days, respectively, the SEM image of the surface morphology was shown in FIG. 6; as illustrated in FIG. 6, after the membrane was soaked in 20wt% HCl aqueous solution and 20wt% NaOH aqueous solution for 150 days, the surface structure of the membrane was intact and defect-free, and it demonstrated that the membrane had desirable acid- and alkali-resistance stability.

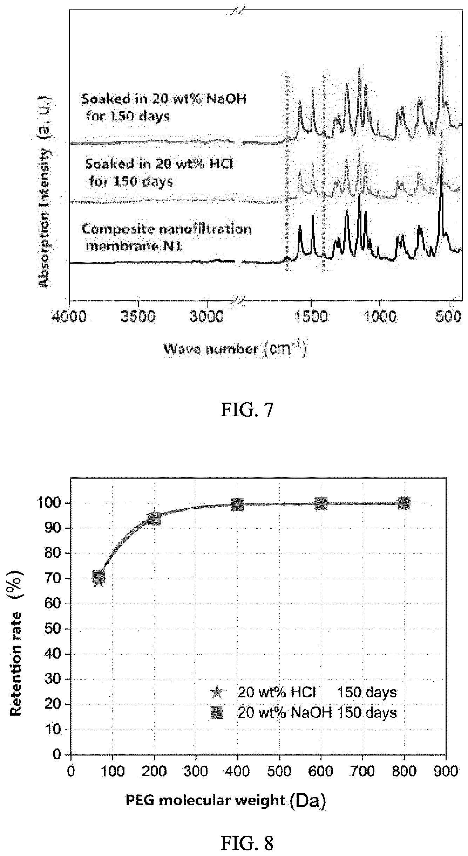

FIG. 7 showed the infrared (IR) spectrogram of the composite nanofiltration membrane N1 prepared in Example 1 after being soaked in 20wt% NaOH aqueous solution and 20wt% HCl aqueous solution for 150 days respectively; as can be seen from FIG. 7, both the characteristic peak of the carbonyl group in the urea group located at 1,658 cm⁻¹ and the characteristic peak of the triazine ring in the triazine structure at 1,413 cm⁻¹ were desirably maintained, it indicated that both the acid treatment and the alkali treatment did not lead to the structural change of the separation layer in the nanofiltration membrane, it further demonstrated that the composite nanofiltration membrane of the invention had desirable acid- and alkali-resistance stability.

FIG. 8 illustrated the molecular weight cut-off characterization curve of the composite nanofiltration membrane N1 after being soaked in 20wt% NaOH aqueous solution and 20wt% HCl aqueous solution for 150 days respectively; as shown in FIG. 8, the molecular weight cut-off of the membrane was substantially unchanged, it indicated that the acid treatment and the alkali treatment did not affect the compactness of the separation layer in the nanofiltration membrane, it further demonstrated that the composite nanofiltration membrane of the invention had desirable acid- and alkali-resistance stability.

### Test Example 4

The acid-permeability and alkali-permeability of the composite nanofiltration membranes prepared in Examples and Comparative Examples were tested, the results were shown in Table 4.

**Table 4**

| No. | Acid-permeability (%) | Alkali-permeability (%) |
|---|---|---|
| N1 | 91.3 | 83.4 |
| N2 | 93.3 | 85.7 |
| N3 | 93.5 | 88.4 |
| N4 | 94.6 | 89.3 |
| N5 | 91.7 | 84.2 |
| N6 | 92.8 | 85.5 |
| N7 | 93.7 | 89.5 |
| N8 | 94.7 | 90.2 |
| N9 | 94.8 | 89.3 |
| N10 | 95.2 | 91.4 |
| N11 | 90.6 | 81.7 |
| N12 | 95.7 | 93.5 |
| D1 | 92.1 | 80.6 |
| D2 | 94.2 | 85.3 |
| D3 | 97.5 | 94.8 |

As illustrated by Table 4, the composite nanofiltration membranes provided by the present invention have excellent acid-permeability and alkali-permeability, when the composite nanofiltration membranes are used in the water treatment process, the membranes have desirable acid- and alkali-resistance, excellent desalination rate and water flux, and allow recycling of an acid or alkali while separating the acid or alkali from a salt.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. An acid- and alkali-resistant composite nanofiltration membrane comprises a bottom layer, a porous middle layer, and a poly(triazine amine-urea) separation layer in sequence;
wherein the poly(triazine amine-urea) separation layer comprises a structural unit I from a polyamine compound, a structural unit II from a triazine compound containing a C-Cl bond, and a structural unit III from a polyisocyanate compound;
wherein the structural unit I and the structural unit II are connected via a structure represented by 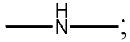 the structural unit I and the structural unit III are connected via a structure represented by 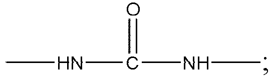 at least one compound of the polyamine compound, the triazine compound containing a C-Cl bond, and the polyisocyanate compound comprise 3 or more reaction groups.

2. The acid- and alkali-resistant composite nanofiltration membrane according to claim 1, wherein a content of the structural unit I is within the range of 40-60wt%, a content of the structural unit II is within the range of 10-20wt%, and a content of the structural unit III is within the range of 30-40wt%, based on a total weight of the poly(triazine amine-urea) separation layer;
preferably, the content of the structural unit I is within the range of 45-50wt%, the content of the structural unit II is within the range of 12-15wt%, and the content of the structural unit III is within the range of 30-35wt%, based on the total weight of the poly(triazine amine-urea) separation layer.

3. The acid- and alkali-resistant composite nanofiltration membrane according to claims 1 or 2, wherein the polyamine compound has a structure represented by at least one of the formulae (1) - (5); 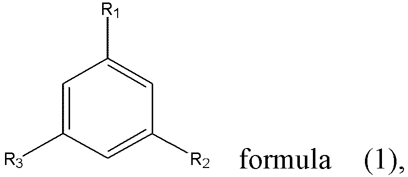 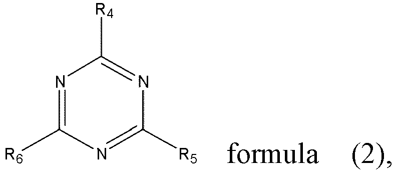 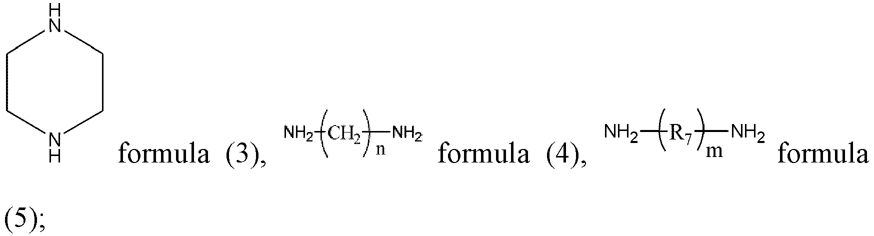
R₁, R₂, and R₃ are each independently (CH₂)ₓNH₂ or H, x is an integer from 0 to 5, and at least two of R₁, R₂, and R₃ are simultaneously NH₂ or (CH₂)ₓNH₂;
R₄, R₅, and R₆ are each independently (CH₂)_{y}NH₂ or H, y is an integer from 0 to 5, and at least two of R₄, R₅, and R₆ are simultaneously NH₂ or (CH₂)_{y}NH₂;
n is an integer from 2 to 8;
R₇ is 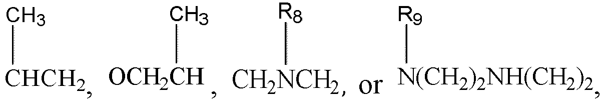
m is an integer from 30 to 100, R₈ and R₉ are each independently H, [(CH₂)₂NH(CH₂)₂]ₚNH₂, or (CH₂)_{q}NH₂, p is an integer from 2 to 10, and q is an integer from 2 to 10;
preferably, the polyamine compound is at least one selected from the group consisting of m-phenylenediamine, p-phenylenediamine, o-phenylenediamine, 1,3,5-triaminobenzene, melamine, piperazine, ethylene diamine, 1,2-propylenediamine, 1,4-butanediamine, divinyl triamine, tetravinyl pentamine, polyethylene polyamine, branched polyethylene imine, and polyetheramine; more preferably a branched polyethylene imine.

4. The acid- and alkali-resistant composite nanofiltration membrane according to any one of claims 1-3, wherein the triazine compound is a triazine compound containing at least two C-Cl bonds;
preferably, the triazine compound has a structure represented by formula (6); 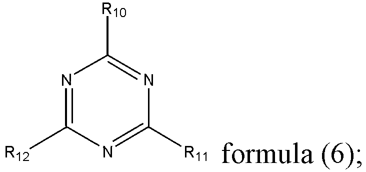 wherein R₁₀, R₁₁, and R₁₂ are each independently H, (CH₂)_{z}Cl, or phenyl, z is an integer from 0 to 4, at least two of R₁₀, R₁₁, and R₁₂ are simultaneously Cl or (CH₂)_{z}Cl;
preferably, the triazine compound is at least one selected from the group consisting of cyanuric chloride, 2,4-dichloro-1,3,5-triazine, and 2,4-dichloro-6-phenyl-1,3,5-triazine, more preferably cyanuric chloride.

5. The acid- and alkali-resistant composite nanofiltration membrane according to any one of claims 1-4, wherein the polyisocyanate compound is at least one selected from the group consisting of meta-xylylene diisocyanate, isophorone diisocyanate, 1,6-hexamethylene diisocyanate, 2-methyl-m-phenylene diisocyanate, 1,4-benzene diisocyanate, toluene-2,4-diisocyanate, 4,4'-methylene-bis-(phenylisocyanate), 1,3-benzene diisocyanate, dicyclohexylmethane-4,4'-diisocyanate, trimethyl hexamethylene diisocyanate, and 1,4-cyclohexyl diisocyanate, preferably 1,3-benzene diisocyanate.

6. The acid- and alkali-resistant composite nanofiltration membrane according to any one of claims 1-5, wherein the poly(triazine amine-urea) separation layer has a thickness within the range of 10-500nm, preferably within the range of 40-300nm;
preferably, the bottom layer has a thickness within the range of 30-150µm, more preferably within the range of 50-125µm;
preferably, the porous middle layer has a thickness within the range of 10-100µm, more preferably within the range of 30-60µm;
preferably, the acid- and alkali-resistant composite nanofiltration membrane has a molecular weight cut-off within the range of 100-300Da, more preferably within the range of 110-260Da.

7. The acid- and alkali-resistant composite nanofiltration membrane according to any one of claims 1-6, wherein the porous middle layer is made of at least one polymer selected from the group consisting of polyethersulfone, polysulfone, polyaromatic ether, polybenzimidazole, polyether ketone, polyether ether ketone, polyacrylonitrile, polyvinylidene fluoride, and polyaryletherketone, preferably polyethersulfone.

8. A method for preparing an acid- and alkali-resistant composite nanofiltration membrane comprising:
(1) preparing a porous middle layer on a surface of the bottom layer;
(2) contacting a surface of the porous middle layer with an aqueous polyamine compound solution, then contacting with an organic solution comprising a triazine compound containing a C-Cl bond and a polyisocyanate compound, and performing an interfacial polymerization reaction to prepare the acid- and alkali-resistant composite nanofiltration membrane;
wherein at least one compound of the polyamine compound, the triazine compound containing a C-Cl bond, and the polyisocyanate compound comprise 3 or more reaction groups.

9. The method according to claim 8, wherein the aqueous polyamine compound solution and the organic solution comprising the triazine compound containing a C-Cl bond and the polyisocyanate compound are used in amounts such that a mass ratio of the polyamine compound, triazine compound and polyisocyanate compound is (10-80): (1-8): 1, preferably (20-40): (1-5): 1;
preferably, the aqueous polyamine compound solution has a concentration within the range of 0.2wt%-10wt%, more preferably within the range of 0.5wt%-5wt%;
preferably, a concentration of the triazine compound containing a C-Cl bond in the organic solution is within the range of 0.05wt%-2wt%, more preferably within the range of 0.1wt%-1wt%;
preferably, a concentration of polyisocyanate compound in the organic solution is within the range of 0.001wt%-0.5wt%, more preferably within the range of 0.01wt%-0.2wt%.

10. The method according to claim 8 or 9, wherein a contacting conditions comprise a contact time within the range of 5-100s, preferably within the range of 10-60s, and a contact temperature within the range of 10-50°C, preferably within the range of 20-30°C;
preferably, a interfacial polymerization reaction conditions comprise a reaction temperature within the range of 10-50°C and a reaction time within the range of 10-200s, preferably a reaction temperature within the range of 20-30°C and a reaction time within the range of 20-120s.

11. The method according to any one of claims 8-10, wherein the method further comprises a step of performing heat treatment on the product after the interfacial polymerization reaction;
preferably, the heat treatment conditions comprise a heat treatment temperature within the range of 40-150°C, more preferably within the range of 60-80°C; and a heat treatment time within the range of 0.5-20min, more preferably within the range of 5-10min.

12. An acid- and alkali-resistant composite nanofiltration membrane produced with the method according to any one of claims 8-11.

13. A method of using the acid- and alkali-resistant composite nanofiltration membrane according to any one of claims 1-7 and 12 in the field of water treatment.
